# EUROPÄISCHE PATENTSCHRIFT

(11) **EP 1 441 218 B1**
(45) Veröffentlichungstag und Bekanntmachung des Hinweises auf die Patenterteilung: **23.04.2008**
(21) Anmeldenummer: 04001047.2
(22) Anmeldetag: 20.01.2004
(51) Int. Cl.: G01N 21/64

(54) **Verfahren zur Detektion von Fluoreszenzlicht**
Method for detecting fluorescent light
Méthode pour la détection de la lumière fluorescente

(30) Priorität: 27.01.2003 DE 10303404
(43) Veröffentlichungstag der Anmeldung: 28.07.2004
(73) Patentinhaber: Carl Zeiss MicroImaging GmbH, 07745 Jena (DE)
(72) Erfinder: Zimmermann, Bernhard, 07743 Jena (DE); Simbürger, Eva, Dr., 14548 Schwielowsee, OT Caputh (DE); Dickinson, Mary, Pasadena, CA 91107 (US)
(74) Vertreter: Hampe, Holger

(56) Entgegenhaltungen:
- DE-A- 19 915 137
- US-B1- 6 403 332
- HSU L ET AL: "Two-photon 3-D mapping of tissue endogenous fluorescence species based on fluorescence excitation spectra" PROC. SPIE - INT. SOC. OPT. ENG. (USA), PROCEEDINGS OF THE SPIE - THE INTERNATIONAL SOCIETY FOR OPTICAL ENGINEERING, 2001, SPIE-INT. SOC. OPT. ENG, USA, Bd. 4262, 21. Januar 2001 (2001-01-21), Seiten 294-300, XP002290908 ISSN: 0277-786X
- DICKINSON M E ET AL: "Sensitive imaging of spectrally overlapping fluorochromes using the LSM 510 META" PROC. SPIE - INT. SOC. OPT. ENG. (USA), PROCEEDINGS OF THE SPIE - THE INTERNATIONAL SOCIETY FOR OPTICAL ENGINEERING, 2002, SPIE-INT. SOC. OPT. ENG, USA, Bd. 4620, 20. Januar 2002 (2002-01-20), Seiten 123-136, XP002290909 ISSN: 0277-786X
- DIEWOK ET AL: 'Novel combination of hard- and soft modeling for equilibrium systems and its application to the quantitative analysis of pH modulated mixture samples' INTERNATIONAL CONFERENCE ON CHEMOMETRICS IN ANALYTICAL CHEMISTRY 2002, SEATTLE (USA),

## Beschreibung

Die Detektion einzelner Fluorochrome in mehrfach markierten stark Licht streuenden Proben kann bisher durch die Auswahl der Anregungswellenlängen im sichtbaren Bereich und der Verwendung von entsprechenden Emissionsfiltern durchgeführt werden.

Bei überlappenden Emissionsspektren kann die Erfassung von Emissionsspektren mit anschließender Regressionsanalyse durchgeführt werden (Schäfer Patent DE19915137). Die dabei verwendeten Detektoren sind in der Regel PMTs, die sich im Lichtweg hinter der Scanoptik des Mikroskops befinden. Dabei ist die Eindringtiefe des visuellen Lasers in Abhängigkeit von der Probe z. T. stark limitiert.

Die Verwendung eines Multiphotonenlasers bei der Erzeugung von Fluoreszenz in gefärbten, stark lichtstreuenden Proben lässt auch die Detektion der Emissionssignale mit Filtern zu. Dabei können Fluoreszenzsignale voneinander getrennt werden, deren Emissionsspektren nicht oder nur geringfügig überlappen. Eine sequentielle Anregung der einzelnen Fluorochrome mit der benötigten Wellenlänge verbunden mit der Detektion des jeweiligen Signals (Multitracking) ist bei der Multiphotonenmikroskopie meist nicht möglich, da mit diesem Verfahren oft mehrere Fluorochrome gleichzeitig mit einer Wellenlänge angeregt werden, da sie breitere Anregungsspektren als bei Einphotonenanregung aufweisen.

Bei stark überlappenden Emissionsspektren der einzelnen Fluorochrome können auch in der Mulfiphotonmmikroskopie die Emissionssignale spektroskopisch über einen PMT Array mit vorgeschaltetem dispersivem Element (US 6,403,332) erfasst und anschließend über Regressionsanalyse getrennt werden.

Bei all diesen Verfahren stellt sich das Problem, dass Fluoreszenzsignale in tiefen Bereichen von stark streuenden Proben zwar erzeugt aber nur noch ungenügend detektiert werden können.

Der Artikel von Hsu et al. "Two-photon mapping of tissue endogenous fluorescence species based on fluorescence excitation spectra", Proceedings of SPIE, Vol. 4262 (2001), S. 294-300 beschreibt ein Multiphotonanregungsverfahren, das einen durchstimmbaren Kurzpulslaser und einen non-descanned Detektor auf die Untersuchung der autofluoreszierenden Substanzen in einem Gewebe anwendet.

Die Erfindung wird durch die Patentansprüche definiert.

Die Erfindung verbindet die Erstellung eines Anregungsspektrums mit Hilfe eines durchstimmbaren Ultrakurzpulslasers mit der Verwendung von non- descanned Detektoren (optimale Streulichtdetektion, Signal wird nicht über die Scanoptik geleitet) zur Aufzeichnung der Intensitäten des Fluorochroms / der Fluorochrome bei unterschiedlichen Wellenlängen. Eine Verwendung dieser Bilder erfolgt, um Anregungsspektren zu erstellen und über Regressionsanalyse die Anteile der Intensitäten einzelner Fluorochrome in einer mehrfach markierten stark streuenden Probe zu bestimmen. Die Kombination der Verwendung eines Ultrakurzpulslasers und der non-descanned Detektoren ermöglicht die Erfassung von Anregungsspektren auch in stark streuenden Proben und die Auftrennung der Signale von stark überlappenden Emissionsspektren.

### Bei dem Verfahren wird folgendermaßen vorgegangen:

Erfassen der Anregungsspektren.

Eine fluoreszierende Probe wird mit dem Multiphotonenlaser beleuchtet. Der Lichtstrahl wird mit Hilfe eines Scanners über die Probe geführt. Das erzeugte Fluoreszenzsignal wird über optische Elemente auf den non- descanned Detektor geleitet. Die gesamte Intensität des Fluoreszenzsignals wird erfasst. Die Wellenlänge des Ultrakurzpulslasers wird in definierten Schritten variiert. Bei jeder Wellenlänge wird wieder die gesamte Intensität über den Detektor erfasst. Die bei jeder einzelnen Wellenlänge erzeugten Abbildungen des Fluorezenzsignals werden in der Reihenfolge der Erfassung abgespeichert.

Das Anregungsspektrum wird für jedes Fluorochrom bestimmt.

Die Fluoreszenzintensität einer mehrfach gefärbten Probe wird unter den gleichen Bedingungen (Einstellung Laserintensität, Abtastschritte, Detektoreinstellung) bestimmt. Die Anregungsspektren der einzelnen Fluorochrome werden zur Bestimmung des Anteils von Fluorochromen in der mehrfach markierten Probe mit Hilfe einer Regressionsanalyse (Schäfer Patent) herangezogen.

### Ausführungsbeispiel

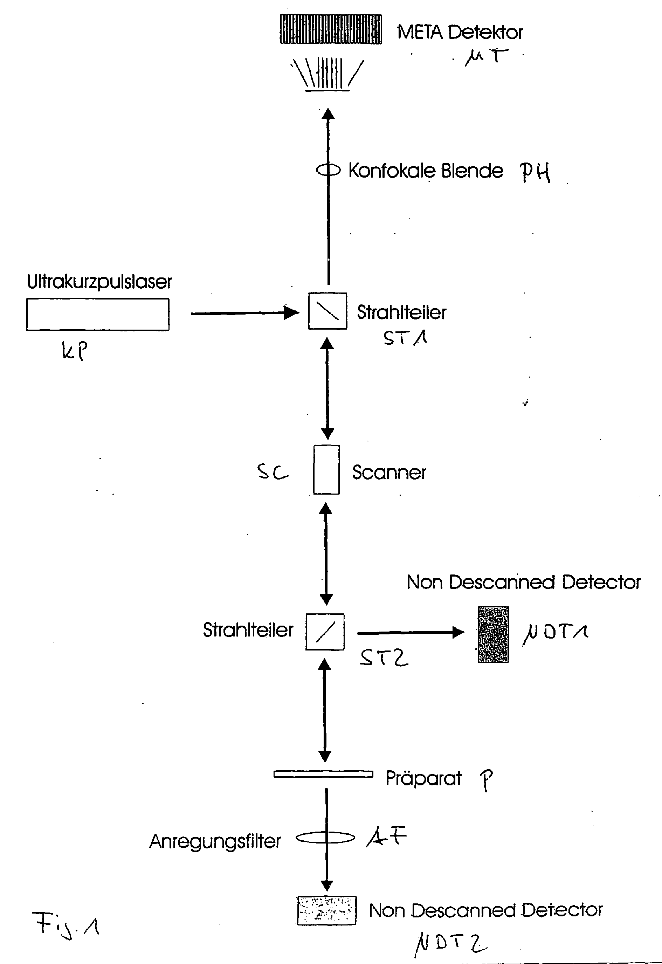

In der Abbildung Fig. 1 ist schematisch ein durchstimmbarer Kurzpulslaser KP dargestellt, der über einen dichroitischen Strahlteiler ST1 und eine X/Y Scanreinrichtiung SC ein Präparat P bestrahlt.

Neben einem wellenlängenselektiven Detektor MT hinter einer konfokalen Blende PH sind non- descanned Detektoren NDT1 und NDT2 vorgesehen, NDT1 für von der Probe P kommendes angeregtes Licht einschließlich Streulicht über einen Strahlteiler ST2 und NDT2 für Licht einschließlich Streulicht, das in der Probe erzeugt wird und durch die Probe hindurchgeht. Hier ist ein Anregungsfilter AF zur Blockierung des Anregungslichtes vorgesehen. Die Durchstimmung des Kurzpulslasers erfolgt beispielsweise in einem Wellenlängenbereich von etwa 700-900 nm, wobei z. B. Fluorophore mit einem Anregungsmaximum bei ca. 750 nm und 800 nm zunächst wellenlängenabhängig bezüglich der mit NDT1 oder NDT2 gemessenen Intensität erfaßt werden.

Sind diese beiden Fluorophore dann beide in einem Präparat vorhanden, wird bei Durchstimmen des Lasers ein Mischspektrum aufgezeichnet, das anschließend durch Regressionsanalyse separiert werden kann.

## Patentansprüche

1. Verfahren zur Detektion und Auswertung des in einer fluoreszierenden Probe durch einen Kurzpulslaser erzeugten Lichtes, wobei bei Bestrahlung von mindestens zwei Fluorophoren
mindestens das erste und zweite Fluorophor separat zur Multiphotonenanregung mittels des Kurzpulslasers mit unterschiedlicher Wellenlänge bestrahlt wird, indem in mindestes einem WL - Bereich die Wellenlänge des Kurzpulslaser in definierten Schritten variiert wird,
das Probenlicht bei jeder Wellenlänge mit mindestens einem non- descanned- Detektor als Referenzspektrum aufgezeichnet wird und
und eine scannende Abtastung zumindest eines Teils der Probe erfolgt und für die jeweils eingestellte Wellenlänge als Mischspektrum ein Fluoreszenzbild der Probe / des Teils der Probe detektiert und abgespeichert wird und aus dem gemessenen Spektrum und den Referenzspektren durch Regressionsanalyse eine Trennung in Einzelspektren vorgenommen wird und über einen ersten non-descanned Detektor (NDT1) von der Probe P kommendes angeregtes Licht einschließlich Streulicht und über einen zweiten non-descanned Detektor (NDT2) Licht einschließlich Streulicht, das in der Probe erzeugt wird und durch die Probe hindurchgeht detektiert wird.

2. Verfahren nach Anspruch 1, wobei eine Durchstimmung des Kurzpulslasers in einem Wellenlängenbereich von etwa 700-900 nm erfolgt.

3. Verfahren nach Anspruch 1 oder 2, mit Anregung von Fluorophoren mit einem Anregungsmaximum bei ca. 750 und 800 nm.

## Claims

1. Method for the detection and evaluation of the light which is generated in a fluorescing sample by means of a short pulse laser, wherein upon irradiation of at least two fluorophores, at least the first and the second fluorophore is irradiated separately for multiphoton excitation by means of the short pulse laser at a different wavelength, in that in at least one WL-range the wavelength of the short pulse laser is varied in defined steps,
the sample light at each wavelength is recorded with at least one non-descanned detector as a reference spectrum, and
at least a part of the sample is scanned and a fluorescence image of the sample / of the part of the sample is detected and stored for the respectively adjusted wavelength as a mixed spectrum, and a separation into individual spectra is performed from the measured spectrum and the reference spectra by means of regression analysis and excited light, including scatter light, which comes from the sample P is detected via a first non-descanned detector (NDT1) and light, including scatter light, which is generated in the sample and passes through the sample is detected via a second non-descanned detector (NDT2).

2. Method as claimed in claim 1, wherein the short pulse laser is tuned in a wavelength range of about 700-900 nm.

3. Method as claimed in claim 1 or 2, with excitation of fluorophores with an excitation maximum at ca. 750 and 800 nm.

## Revendications

1. Procédé de détection et d'évaluation de la lumière engendrée dans un échantillon fluorescent par un laser à impulsions courtes, où lors d'une irradiation d'au moins deux fluorophores,
au moins le premier et le deuxième fluorophore sont irradiés chacun séparément en vue d'une excitation multiphotonique au moyen du laser à impulsions courtes avec des longueurs d'onde différentes en variant dans au moins une plage de longueus d'onde, la longueur d'onde du laser à impulsions courtes selon des pas définis,
la lumière de l'échantillon est enregistrée pour chaque longueur d'onde avec au moins un détecteur non-déscanné, comme spectre de référence et
un balayage d'exploration d'au moins une partie de l'échantillon a lieu, et pour la longueur d'onde respectivement réglée, comme spectre de mélange, une image de fluorescence de l'échantillon/de la partie de l'échantillon est détectée et stockée, et à partir du spectre mesuré et des spectres de référence, par une analyse de régression, une séparation en spectres individuels est effectuée, et de la lumière excitée incluant de la lumière diffusée provenant de l'échantillon P et passant par un premier détecteur non-descanné (NDT1) et de la lumière incluant de la lumière diffusée passant par un deuxième détecteur non-descanné (NDT2), qui est engendrée dans l'échantillon et traverse l'échantillon, est détectée.

2. Procédé selon la revendication 1, où un accord du laser à impulsions coutes a lieu dans une plage de longueurs d'onde d'environ 700-900 nm.

3. Procédé selon la revendication 1 ou 2, avec l'excitation de fluorophores avec un maximum d'excitation à environ 750 et 800 nm.
